Europäisches Patentamt

European Patent Office

Office européen des brevets

(19)

(11) Numéro de publication: **0 061 613**
**B1**

(12) **FASCICULE DE BREVET EUROPEEN**

(45) Date de publication du fascicule du brevet:
**10.07.85**

(51) Int. Cl.⁴: **H 04 N 5/14**

(21) Numéro de dépôt: **82101848.8**

(22) Date de dépôt: **09.03.82**

(54) Procédé et dispositif d'accentuation des traits d'une image en noir et blanc reproduite à partir d'une transcription numérique.

(30) Priorité: **12.03.81 FR 8104941**

(43) Date de publication de la demande:
**06.10.82 Bulletin 82/40**

(45) Mention de la délivrance du brevet:
**10.07.85 Bulletin 85/28**

(84) Etats contractants désignés:
**BE DE FR GB IT NL**

(56) Documents cités:
**EP - A - 0 001 535
DE - A - 2 229 674
FR - A - 2 080 916
FR - A - 2 188 381
US - A - 3 536 826
US - A - 3 814 847
US - A - 3 996 421
US - A - 4 091 420**

**RUNDFUNKTECHNISCHE MITTEILUNGEN, vol. 10, no. 5, octobre 1966, HAMBURG (DE) P. MARTINEZ et al.: "Neue Schaltungen für eine "Plumbicon"*)- Studiokamera (Schwarzweiss)", pages 247-250**

(73) Titulaire: **COMPAGNIE INDUSTRIELLE DES TELECOMMUNICATIONS CIT-ALCATEL S.A. dite:, 12, rue de la Baume, F-75008 Paris (FR)**

(72) Inventeur: **Nahon, Richard, 9, avenue Paul Cézanne Elancourt, F-78310 Maurepas (FR)**
Inventeur: **Decuyper, Jean-Claude, 13, allée de la Deule Elancourt, F-78310 Maurepas (FR)**

(74) Mandataire: **Weinmiller, Jürgen et al, Zeppelinstrasse 63, D-8000 München 80 (DE)**

## Description

La présente invention concerne la reproduction d'une image en noir et blanc mise en mémoire sous forme numérique.

Les images sont transcrites sous forme numérique avec la définition la plus faible possible afin de limiter le nombre de bits nécessaires. Lors de sa transcription en numérique, une image est partagée, selon un quadrillage régulier le moins serré possible, en zones auxquelles on attribue des valeurs numériques représentatives de leurs teintes moyennes. Lors de sa restitution, on reproduit un ensemble de zones selon le même quadrillage auxquelles on affecte les teintes moyennes correspondant aux valeurs numériques par un choix entre différents graphismes arbitraires présentant ces mêmes teintes moyennes.

Les traits d'une image qui coïncident avec les changements rapides de teinte ne suivent pas le quadrillage utilisé pour la transcription numérique mais traversent les zones auxquelles ils donnent une teinte irrégulière. Cette irrégularité de teinte n'étant pas prise en compte au cours de la transcription numérique, il en résulte, à la reproduction, une atténuation des traits donnant un effet de flou qui est l'un des principaux obstacles à la réduction de la définition d'une image numérique.

La présente invention a pour but de combattre ce défaut, notamment dans le cas où l'image originale est un portrait transcrit en numérique à l'aide d'un balayage continu par lignes horizontales et où l'effet de flou se manifeste plus particulièrement sur les traits verticaux du profil du nez qui apparaissent sur un fond peu contrasté.

Elle a pour objet un dispositif d'accentuation des traits d'une image en noir et blanc reproduite à partir d'une transcription numérique formée d'une suite de nombres qui résultent de l'analyse de l'image originale par zones élémentaires successives et qui sont représentatifs des niveaux de gris desdites zones élémentaires, comportant:

— des premiers moyens comparateurs pour comparer chaque nombre reçu avec une première et une deuxième valeurs de seuil délimitant une plage déterminée de gris moyens et pour délivrer une première signalisation chaque fois que le nombre reçu est en dehors de ladite plage de gris moyens,
— des moyens mémoires pour mémoriser chaque nombre reçu sur une durée au moins égale à l'intervalle de temps séparant la réception de deux nombres successifs,
— des moyens soustracteurs pour déterminer la valeur de l'écart existant entre chaque nombre reçu et celui conservé par les moyens mémoires qui l'a précédé immédiatement,
— des deuxièmes moyens comparateurs pour comparer la valeur dudit écart avec des troisième et quatrième valeurs de seuil proches de zéro définissant une plage d'écart minimum et pour délivrer une deuxième signalisation chaque fois que la valeur dudit écart est dans cette plage d'écart minimum,
— des troisièmes moyens comparateurs pour comparer la valeur dudit écart avec des cinquième et sixième valeurs de seuil définissant une plage d'écart maximum et pour délivrer une troisième signalisation chaque fois que ledit écart est en dehors de cette plage d'écart maximum,
— des moyens amplificateurs pour mulitplier la valeur dudit écart par un coefficient de pondération et obtenir un terme d'accentuation
— et des moyens de traitement pour délivrer les nombres à la cadence où ils sont reçus, soit non modifiés, soit augmentés d'un terme d'accentuation selon que l'on se trouve en présence ou en absence de signalisation.

D'autres caractéristiques et avantages de l'invention ressortiront des revendications jointes et de la description ci-après d'un exemple de réalisation d'un mode de réalisation. Cette description sera faite en regard du dessin dans lequel:

la Fig. 1 représente de manière schématique un dispositif d'accentuation selon l'invention

et la Fig. 2 un exemple de réalisation d'un des comparateurs doubles utilisés dans le dispositif de la Fig. 1.

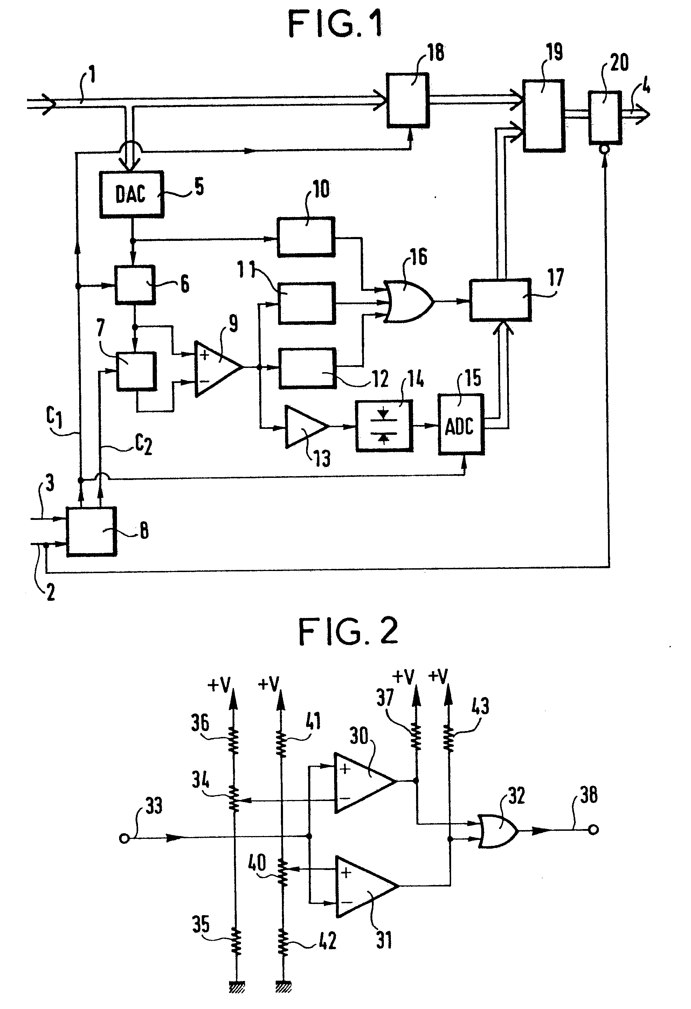

Le dispositif représenté à la Fig. 1 présente une entrée numérique 1 sur laquelle il reçoit successivement, de manière synchrone, les nombres d'une transcription numérique d'image, deux entrées d'horloge 2 et 3 par lesquelles il reçoit respectivement la fréquence d'horloge à laquelle parviennent les nombres de la transcription numérique et une fréquence double de la fréquence d'horloge, et une sortie numérique 4 sur laquelle il délivre, à la fréquence d'horloge, les nombres de la transcription numérique de l'image dont les traits ont été accentués. Il comporte:

— un convertisseur numérique-analogique DAC 5 connecté à l'entrée numérique 1,
— deux échantillonneurs analogiques 6 et 7 constituant une mémoire, commandées par un circuit de base de temps 8 et connectés, l'un 6 à la sortie du convertisseur numérique-analogique DAC 5 dont il échantillonne le signal analogique de sortie pendant le deuxième quart de chaque intervalle de temps durant lequel un nombre est appliqué sur l'entrée numérique 1, et l'autre 7 à la sortie du précédent dont il échantillonne le signal analogique de sortie pendant le premier quart de l'intervalle de temps durant lequel un nombre est appliqué sur l'entrée numérique 1,
— un soustracteur analogique 9 à deux entrées, l'une additive reliée à la sortie de

l'échantillonneur 6, l'autre soustractive reliée à la sortie de l'échantillonneur 7,

un premier comparateur double 10 connecté directement à la sortie du convertisseur analogique-numérique 5, comparant le signal analogique de sortie du convertisseur analogique-numérique 5 avec une première et une deuxième valeurs de seuil délimitant une plage déterminée de gris moyens et délivrant en sortie un signal binaire à l'état logique 0 lorsque le signal analogique de sortie du convertisseur numérique-analogique 5 est dans la plage déterminée de gris moyens et à l'état logique 1 dans le cas inverse,

— un deuxième comparateur double 11 connecté à la sortie du soustracteur 9 comparant le signal analogique de sortie de ce soustracteur 9 avec une troisième et une quatrième valeurs de seuil proches de zéro définissant une plage d'écart minimum et délivrant en sortie un signal binaire à l'état logique 0 lorsque le signal analogique du soustracteur 9 est à l'extérieur de la plage d'écart minimum et à l'état logique 1 dans le cas inverse,

— un troisième comparateur double 12 également connecté en sortie du soustracteur 9 comparant le signal de sortie de ce soustracteur 9 avec une cinquième et une sixième valeurs de seuil définissant une plage d'écart maximum et délivrant en sortie un signal binaire à l'état logique 0 lorsque le signal analogique de sortie du soustracteur 9 est à l'intérieur de la plage d'écart maximum et à l'état logique 1 dans le cas inverse,

— un amplificateur 13 à gain réglable également connecté à la sortie du soustracteur 9,

— un limiteur 14 disposé à la sortie de l'amplificateur 13 et limitant la plage d'excursion du signal de sortie de ce dernier,

— un convertisseur analogique-numérique ADC 15 connecté à la suite du limiteur 14 et commandé par le circuit de base de temps 8 pour être actif pendant la deuxenième moitié de chaque intervalle de temps durant lequel un nombre est appliqué sur l'entrée numérique 1,

— une porte logique »OU« 16 à trois entrées connectées aux sorties des comparateurs doubles 10, 11 et 12,

— un circuit de transfert 17 disposé à la suite du convertisseur analogique-numérique ADC 15 et commandé par la porte logique »OU« 16, laissant passer le signal de sortie numérique du convertisseur analogique-numérique ADC 15 lorsque la sortie de la porte logique »OU« 16 est à l'état logique 0 et bloquant ce signal en le remplaçant par un signal nul lorsque la sortie de la porte logique »OU« 16 est à l'état logique 1,

— un premier registre numérique 18 mémorisant le nombre appliqué à l'entrée numérique 1, commandé par le circuit de base de temps 8 en synchronisme avec l'échantillonneur 6,
un additionneur numérique 19 à deux entrées connectées l'une à la sortie du premier registre numérique 18 et l'autre à la sortie du circuit de transfert 17,

— et un deuxième registre numérique 20 placé en sortie de l'additionneur 19 et commandé par une version ici complémentée du signal d'horloge appliqué à l'entrée 2.

Ce circuit permet d'accentuer les traits d'une image en renforçant les différences existant entre les nombres consécutifs d'une suite numérique d'une transcription numérique d'image. Ce renforcement s'effectue en ayoutant à un nombre une valeur de correction de même signe et éventuellement proportionnelle à sa différence par rapport au nombre qui le précède dans la suite. La valeur de correction est calculée dans le circuit pour tous les nombres de la suite, mais elle n'est prise en compte que si le nombre appartient à une certaine plage de gris moyens et si sa différence par rapport au nombre précédent représente une variation faible mais non nulle de nuance de gris entre deux zones successives d'analyse traduisant l'existence d'un changement de ton et par conséquent d'un contour peu marqué dans une gamme moyenne de gris.

La transcription numérique d'image est formée par exemple d'une suite An de nombres binaires appliqués successivement à l'entrée numérique 1 du circuit pendant les périodes successives d'un signal d'horloge de forme rectangulaire symétrique appliqué l'entrée 2 du circuit de base de temps 8, les changements de nombre s'effectuant par exemple ici sur les fronts descendants du signal d'horloge. Le circuit de base de temps 8 reçoit également sur l'entrée 3 un signal rectangulaire symétrique au double de la fréquence d'horloge et élabore, par combinaison logique de ces deux signaux, deux signaux de commande C1, C2 à la fréquence d'horloge, de forme rectangulaire dissymétrique, l'un C1 à l'état haut pendant la deuxième moitié de la demi-période à l'état bas du signal d'horloge, c'est-à-dire pendant le deuxième quart du temps où un nombre est appliqué à l'entrée numérique 1, et l'autre C2 à l'état haut pendant la première moitié de la demi-période à l'état bas du signal d'horloge, c'est-à-dire pendant le premier quart du temps où un nombre est appliqué à l'entrée numérique 1.

Le signal de commande C1 est appliqué en commande de l'échantillonneur 6 et du registre 18 pour lesquels les fronts actifs de ce signal sont les fronts montants, ainsi qu'en commande du convertisseur analogique-numérique ADC 15 pour lequel les fronts actifs de ce signal sont les fronts descendants. Le signal de commande C2 est appliqué en commande de l'échantillonneur 7 pour lequel les fronts actifs de ce signal C2 sont les fronts montants. On précise en outre que le registre 20 est sensible aux fronts montants de la version complémentée du signal d'horloge, qui le commande.

Le signal d'horloge et les signaux de commande C1 et C2 contrôlent la succession des opérations effectuées par le circuit. Soit A(m) un nombre appliqué à l'entrée numérique 1 pendant une période du signal d'horloge. Le premier quart du temps d'application du nombre A(m) à l'entrée numérique 1 est mis à profit pour calculer la valeur analogique a(m) correspondante, pour vérifier que cette valeur correspond à une nuance de gris appartenant à la plage de gris moyens à laquelle se limite le traitement d'accentuation des traits et pour transférer, grâce au signal de commande C2, la valeur analogique a(m−1) du nombre précédent A(m−1) dans l'échantillonneur 7. Le deuxième quart du temps d'application du nombre A(m) à l'entrée numérique 1 est mis à profit pour mettre en mémoire, grâce au signal de commande C1, le nombre A(m) dans le registre 18 et la valeur analogique a(m) du nombre A(m) dans l'échantillonneur 6, calculer la valeur analogique e(m) de l'écart entre le nombre A(m) et celui A(m−1) qui le précède,

$$e(m) = a(m) - a(m-1),$$

vérifier que cet écart n'est pas nul mais reste inférieur en amplitude à une certaine limite, calculer un terme correctif en limitant éventuellement son amplitude. La deuxième moitié du temps d'application du nombre A(m) à l'entrée numérique 1 est mise à profit pour convertir en valeur numérique le terme correctif et l'ajouter ou non, selon le résultat des vérifications, au nombre A(m), le résultat de la sommation étant pris en compte sous le contrôle du signal d'horloge complémenté dès la fin du temps d'application du nombre A(m) à l'entrée numérique 1 et transmis à la sortie numérique 4 du circuit.

La fréquence d'horloge est de l'odre de 10,5 kHz de sorte qu'un nombre A(m) est appliqué pendant environ 95 μs. Le convertisseur numérique-analogique DAC 5, par exemple du type à sommation de courant, fournit, en un laps de temps négligeable par rapport à cette durée, la valeur analogique correspondante a(m) qui est testée, également en un laps de temps négligeable, par le premier comparateur double 10. Ce dernier émet, pendant pratiquement toute la durée d'application du nombre A(m) à l'entrée numérique 1, une première signalisation à l'état logique 1 dans le cas où la valeur analogique a(m) correspond à une nuance de gris n'appartenant pas à ladite plage de gris moyens à laquelle on limite le traitement d'accentuation des traits.

Avec des nombres A(m) à cinq bits permettant de distinguer trente deux nuances de gris, cette plage peut se limiter à une plage médiane d'une dizaine de niveaux.

Pendant le premier quart de l'intervalle de temps d'application du nombre A(m) à l'entrée numérique 1 l'échantillonneur analogique 7 recopie en un temps négligeable, sous le contrôle du signal de commande C2, la valeur analogique a(m−1) du nombre A(m−1) mémorisée dans l'échantillonneur analogique 6.

Dès le début du deuxième quart de l'intervalle de temps d'application du nombre A(m) à l'entrée numérique 1, l'échantillonneur 7 est bloqué par le signal de commande C2 tandis que le premier registre numérique 18 et le premier échantillonneur 6 sont placés en inscription par le signal de commande C1 et recopient l'un et l'autre, en un temps négligeable par rapport aux quelque 23 μs que dure un quart d'intervalle de temps d'application du nombre A(m) à l'entrée numérique 1, les valeurs numérique pour l'un et analogique pour l'autre appliquées à leurs entrées.

Le soustracteur analogique 9 délivre, également en un laps de temps négligeable, la valeur analogique de l'écart e(m). Cette dernière est testée presque instantanément par le deuxième comparateur analogique double 11 qui émet une deuxième signalisation (état logique 1 à sa sortie) dans le cas où la valeur e(m) de l'écart a une amplitude proche de zéro indiquant que la nuance de gris n'évolue pas ou très faiblement entre les zones élémentaires successives d'analyse de l'image correspondant aux nombres A(m−1) et A(m) de la transcription numérique. Elle est également testée presque instantanément par le troisième comparateur analogique double 12 qui émet une troisième signalisation (état logique 1 à sa sortie) dans le cas où la valeur e(m) de l'écart est grande en valeur absolue, traduisant une importante évolution de la nuance de gris qu'il est inutile d'accentuer.

Toujours dans un laps de temps négligeable l'amplificateur analogique 13 à gain $\beta$ réglable délivre à sa sortie un terme corrsetif $\beta\,e(m)$ dont l'amplitude maximale est limitée par le limiteur 14.

Le convertisseur analogique-numérique ADC 15 est commandé par le signal de commande C1. Il dispose de presque toute la durée de la deuxième moitié de l'intervalle de temps d'application du nombre A(m) à l'entrée numérique 1, pratiquement 47 μs, pour effectuer sa conversion car il est suivi d'éléments rapides opérant en un temps négligeable par rapport à cette durée et la prise en compte de son résultat n'est faite qu'à la fin de cette deuxième moitié d'intervalle de temps. Il peut être du type à approximations successives ou encore plus rapide du type parallèle. Pour un nombre A(m) à cinq bits, de valeur comprise entre 0 et 31, il délivre en cinq bits dont un de signe, sur une sortie parallèle, la valeur numérique du terme correctif dont l'amplitude est par exemple limitée à 8, les conditions imposées au nombre A(m) pour l'accentuation étant par exemple d'être compris entre 10 et 20 et de présenter par rapport au nombre qui le précède dans la suite un écart non nul d'amplitude inférieure à 8.

La valeur numérique du terme de correction disponible sur la sortie parallèle du convertisseur analogique numérique ADC 15 est appliquée au circuit de transfert 17 qui la laisse passer en direction de l'additionneur 19 s'il reçoit un niveau logique 0 de la part de la porte logique »OU« 16 traduisant le fait que la valeur numérique A(m) correspond à une nuance de gris répondant aux conditions imposées pour l'accentuation ou qui la bloque et délivre sur sa sortie un signal numérique nul en direction de l'additionneur 19 s'il reçoit un niveau logique 1 de la part de la porte logique »OU« 16 traduisant le fait que la valeur numérique A(m) correspond à une nuance de gris ne répondant pas aux conditions imposées pour une accentuation. Le circuit de transfert peut être réalisé par exemple à l'aide d'un multiplexeur à deux entrées parallèles l'une connectée à la sortie du convertisseur analogique-numérique ADC 15 et l'autre portée au niveau logique 0 et à une entrée d'adressage connectée à la sortie de la porte logique »OU« 16. Il peut également être réalisé à l'aide d'un réseau de portes logiques.

L'additionneur numérique 19 additionne le nombre présent dans le premier registre numérique 18 avec celui qui lui est fourni par le circuit de transfert 17. Au moment de la prise en compte de son résultat par le deuxième registre numérique 20 c'est-à-dire à la fin de l'intervalle de temps d'application du nombre A(m) à l'entrée numérique 1 du circuit, le premier registre numérique 18 contient le nombre A(m) et le circuit de transfert 17 délivre la valeur numérique du terme de correction correspondant au nombre A(m) ou à un nombre nul si la valeur numérique A(m) correspond à une nuance de gris ne répondant pas aux conditions imposées pour une accentuation. Cet additionneur peut être réalisé au moyen d'une mémoire morte programmée.

La Fig. 2 représente un exemple de réalisation du comparateur analogique double 10. Le comparateur double comporte deux amplificateurs différentiels 30 et 31 montés en comparateurs à seuils contrôlant une porte logique »OU« 32 à deux entrées. L'amplificateur différentiel 30 a son entrée non inverseuse reliée à l'entrée 33 du comparateur analogique double, son entrée inverseuse connectée au curseur de réglage d'un potentiomètre 34 dont la résistance est connectée en série avec deux résistances fixes 35 et 36 entre la masse et une source de polarisation + V, et sa sortie reliée par une résistance 37 à la source de polarisation + V, cet amplificateur 30 étant par exemple à transistor de sortie à collecteur ouvert. La tension de réglage VA à laquelle est portée son entrée inverseuse détermine la limite supérieure de la fenêtre du comparateur analogique double. Tant que le niveau appliqué à l'entrée 33 du comparateur analogique double reste inférieur à la tension VA, la sortie de l'amplificateur différentiel 30 est à un potentiel nul ou très faible et délivre un niveau logique 0 à l'entrée de la porte logique »OU« 32. Dès que le niveau appliqué à l'entrée du comparateur analogique double dépasse la tension VA, l'amplificateur différentiel 30 bascule, sa sortie devenant positive et appliquant un niveau logique 1 à l'entrée de la porte logique »OU« 32 qui est transmis en sortie 38 du comparateur analogique double.

L'amplificateur différentiel 31 a son entrée non inverseuse connectée au curseur de réglage d'un potentiomètre 40 dont la résistance est connectée en série avec deux résistances 41 et 42 entre la masse et la source de polarisation + V, son entrée inverseuse connectée à l'entrée 33 du comparateur analogique double et sa sortie reliée par une résistance 43 à la source de tension + V, cet amplificateur 31 étant également à transistor de sortie à collecteur ouvert. La tension de réglage VB à laquelle est portée son entrée non inverseuse est choisie inférieure à la tension de réglage VA et détermine la limite inférieure de la fenêtre du comparateur double. Tant que le niveau appliqué à l'entrée 33 du comparateur analogique double reste supérieur à la tension VB la sortie de l'amplificateur différentiel 31 est à un potentiel nul ou très faible et délivre un niveau logique 0 à l'entrée de la porte logique »OU« 32. Dès que le niveau appliqué à l'entrée 33 du comparateur analogique double devient inférieur à la tension VB, l'amplificateur différentiel 31 bascule, sa sortie devenant positive et appliquant un niveau logique 1 à l'entrée de la porte logique »OU« 32 qui est transmis en sortie 38 du comparateur analogique double.

Le circuit de la Fig. 2 peut être modifié afin de réaliser un comparateur analogique double du type de celui référencé par 12 dans la Fig. 1 et qui compare le signal qui lui est appliqué en entrée à deux seuils de polarités opposées et non à deux seuils positifs comme c'est le cas pour le comparateur 10 de cette Fig. 1. Il suffit pour cela de connecter la résistance du potentiomètre 40, dont le curseur de réglage est connecté à l'entrée non inverseuse de l'amplificateur différentiel 31, en série avec les deux résistances 41 et 42 entre la masse et une source de polarisation −V au lieu de connecter ces trois résistances en série entre la masse et la source de polarisation + V.

Le circuit de la Fig. 2 peut également être modifié simplement afin de réaliser un comparateur analogique double du type de celui référencé par 11 dans la figure 1 et qui non seulement compare le signal qui lui est appliqué en entrée à deux seuils de polarités opposées mais encore présente un signal de sortie dont la signification est opposée à celle des signaux de sortie des comparateurs 10 et 12 de cette Fig. 1. Il suffit pour cela d'effectuer, outre la même modification que celle décrite pour le comparateur 12, le remplacement de la porte logique »OU« 32 par une porte logique »non OU«.

On peut, sans sortir du cadre de l'invention, modifier certaines dispositions ou remplacer certains moyens par des moyens équivalents.

## Revendications

1. Dispositif d'accentuation des traits d'une image en noir et blanc reproduite à partir d'une transcription numérique formée, d'une suite de nombres disponibles successivement qui résultent de l'analyse de l'image originale par zones élémentaires successives et qui sont représentatifs des niveaux de gris desdites zones élémentaires, caractérisé en ce qu'il comporte:

— des premiers moyens comparateurs (10) pour comparer chaque nombre reçu avec une première et une deuxième valeurs de seuil délimitant une plage déterminée de gris moyens et pour délivrer une première signalisation chaque fois que le nombre reçu est en dehors de ladite plage de gris moyens,

— des moyens mémoires (6, 7) pour mémoriser chaque nombre reçu sur une durée au moins égale à l'intervalle de temps séparant la réception de deux nombres successifs,

— des moyens soustracteurs (9) pour déterminer la valeur de l'écart existant entre chaque reçu et celui conservé par les moyens mémoires (6, 7), qui l'a précédé immédiatement,

— des deuxièmes moyens comparateurs (11) pour comparer la valeur dudit écart avec des troisième et quatrième valeurs de seuil proches de zéro définissant une plage d'écart minimum et pour délivrer une deuxième signalisation chaque fois que la valeur dudit écart est dans cette plage d'écart minimum,

— des troisièmes moyens comparateurs (12) pour comparer la valeur dudit écart avec des cinquième et sixième valeurs de seuil définissant une plage d'écart maximum et pour délivrer une troisième signalisation chaque fois que ledit écart est en dehors de cette plage d'écart maximum,

— des moyens amplificateurs (13) pour multiplier la valeur dudit écart par un coefficient de pondération et obtenir un terme d'accentuation

— et des moyens de traitement pour délivrer les nombres à la cadence où ils sont reçus, soit non modifiés, soit augmentés d'un terme d'accentuation selon que l'on se trouve en présence ou en absence de signalisation.

2. Dispositif selon la revendication 1, caractérisé en ce que les moyens de traitement comportent un additionneur (19) avec une première entrée sur laquelle sont appliqués les nombres reçus et avec une deuxième entrée sur laquelle sont appliqués, par l'intermédiaire d'un circuit de transfert (17) commandé par les signalisations, soit un nombre nul, soit lesdits termes d'accentuation, et ledit circuit de transfert (17) recevant sur son entrée données les termes d'accentuation qu'il transmet à sa sortie lorsqu'il est rendu passant par une absence de signalisation et engendrant un nombre nul en sortie lorsqu'il est bloqué par une présence de signalisation.

3. Dispositif selon la revendication 1, dans lequel lesdits moyens de traitement sont numériques alors que lesdits moyens comparateurs (10, 11, 12), mémoires (6, 7), soustracteurs (9), et amplificateurs (13) sont analogiques, charactérisé en ce qu'il comporte en outre:

— des moyens de conversation numérique analogique DAC (5) placés en entrée devant les premiers moyens comparateurs (10, 11, 12) et les moyens mémoires (6, 7)

— et des moyens de conversion analogique numérique ADC (15) placés en sortie des moyens amplificateurs (13).

4. Dispositif selon la revendication 3, caractérisé en ce qu'il comporte en outre des moyens limiteurs (14) intercalés à la suite des moyens moyens amplificateurs (13) pour limiter l'amplitude maximum du terme d'accentuation.

**Patentansprüche**

1. Vorrichtung zur Akzentuierung der Striche eines Schwarz-Weiß-Bildes, das ausgehend von einer digitalen Übertragung reproduziert wird, die aus einer Folge von aufeinanderfolgend verfügbaren Zahlen gebildet wird, die aus der Analyse des Originalbilds in aufeinanderfolgenden elementaren Zonen resultieren und die repräsentativ für Graupegel dieser elementaren Zonen sind, dadurch gekennzeichnet, daß sie aufweist:

— erste Vergleichsmittel (10), um jede erhaltene Zahl mit einem ersten und einem zweiten Schwellwert zu vergleichen, die einen bestimmten Bereich mittlerer Grautöne begrenzen, und um eine erste Signalisation jedesmal dann zu liefern, wenn die erhaltene Zahl außerhalb des Bereichs mittlerer Grautöne liegt,

— Speichermittel (6, 7), um jede erhaltene Zahl über einen Zeitraum zu speichern, der mindestens gleich dem Zeitintervall ist, das den Empfang zweier aufeinanderfolgender Zahlen trennt,

— Subtraktionsmittel (9), um den Wert des zwischen jeder erhaltenen Zahl und der direkt vorausgehenden, von den Speichermitteln (6, 7) gespeicherten Zahl bestehenden Abstands zu bestimmen,

— zweite Vergleichsmittel (11), um den Wert dieses Abstands mit dritten und vierten Schwellwerten nahe Null zu vergleichen, die einen Minimal-Abstandsbereich definieren, und um eine zweite Signalisation jedesmal dann zu liefern, wenn der Wert dieses Abstands sich in diesem Minimal-Abstandsbereich befindet,

— dritte Vergleichsmittel (12), um den Wert dieses Abstands mit fünften und sechsten Schwellwerten zu vergleichen, die einen Maximal-Abstandsbereich definieren, und um eine dritte Signalisation jedesmal dann zu liefern, wenn der Abstand sich außerhalb dieses Maximal-Abstandsbereichs befindet,

— Verstärkermittel (13), um den Wert dieses Abstands mit einem Gewichtungskoeffizienten zu multiplizieren und einen Akzentuierungsterm zu erhalten,
— und Verarbeitungsmittel, um die Zahlen im Rhythmus abzugeben, in dem sie erhalten wurden, und zwar entweder unverändert oder um einen Akzentuierungsterm vergrößert, je nachdem, ob eine Signalisation vorliegt oder nicht.

2. Vorrichtung nach Anspruch 1, dadurch gekennzeichnet, daß die Verarbeitungsmittel einen Addierer (19) mit einem ersten Eingang, an den die empfangenen Zahlen angelegt werden, und mit einem zweiten Eingang aufweisen, an den über einen Übertragungskreis (17), der von den Signalisationen gesteuert wird, entweder eine Zahl Null oder die Akzentuierungsterme angelegt werden, wobei der Übertragungskreis (17) an seinem Dateneingang die Akzentuierungsterme empfängt, die er an seinen Ausgang weitergibt, wenn er aufgrund einer Abwesenheit von Signalisation durchlässig wird, während er eine Zahl Null am Ausgang erzeugt, wenn er aufgrund des Vorhandenseins von Signalisation blockiert ist.

3. Vorrichtung nach Anspruch 1, in der die Verarbeitungsmittel digital ausgebildet sind, während die Vergleichsmittel (10, 11, 12), Speicher (6, 7), Subtrahierer (9) und Verstärker (13) analog ausgebildet sind, dadurch gekennzeichnet, daß sie außerdem aufweist:

— Mittel zur Digital-Analog-Umwandlung DAC (5), die am Eingang vor den ersten Vergleichsmitteln (10, 11, 12) und den Speichermitteln (6, 7) angeordnet sind,
— und Mittel zur Analog-Digital-Umwandlung ADC (15), die am Ausgang der Verstärkermittel (13) angeordnet sind.

4. Vorrichtung nach Anspruch 3, dadurch gekennzeichnet, daß sie außerdem Begrenzermittel (14) aufweist, die hinter den Verstärkermitteln (13) eingefügt sind, um die maximale Amplitude des Akzentuierungsterms zu begrenzen.

**Claims**

1. A device for accentuating lines of a monochrome image reproduced from a digital transcription formed by a succession of successively available numbers which result from the analysis of successive elementary zones of the original image and which are representative for the grey levels of said elementary zones, characterized in that it comprises:

— first comparator means (10) for comparing each number received with a first and a second threshold value which delimit a predetermined range of mid greys, and for delivering a first signalisation each time the number received is outside said range of mid greys,
— storage means (6, 7) for storing each number received over a period at least equal to the time interval separating the reception of two successive numbers,
— subtractor means (9) for determining the value of the difference between each number received and the immediately preceding number stored by the storage means (6, 7),
— second comparator means (11) for comparing the value of said difference with third and fourth threshold values close to zero which define a minimum difference range and for delivering a second signalisation each time the value of said difference is within said minimum difference range,
— third comparator means (12) for comparing the value of said difference with fifth and sixth threshold values which define a maximum difference range and for delivering a third signalisation each time said difference is outside of this maximum difference range,
— amplifier means (13) for multiplying the value of said difference by a weighting coefficient and for obtaining an accentuation term,
— and processing means for delivering the numbers at the rate at which they are received, either non-modified or increased by an accentuation term according to whether or not a signalisation is present.

2. A device according to claim 1, characterized in that the processing means comprise an adder (19) with a first input to which the numbers received are applied, and with a second input to which either zero or said accentuation terms are applied via a transfer circuit (17) controlled by the signalisations, said transfer circuit (17) receiving on its data input the accentuation terms which it transmits to its output when it is enabled by the absence of signalisation, whereas it generates a zero number at its output when it is inhibited by the presence of signalisation.

3. A device according to claim 1, in which said processing means are digital whereas said comparator means (10, 11, 12), memories (6, 7), subtractors (9) and amplifiers (13) are analog means, characterized in that it further comprises

— digital-to-analog conversion means DAC (5) placed at the input upstream of the first comparator means (10, 11, 12) and the memory means (6, 7),
— and analog-to-digital conversion means ADC (15) placed at the output downstream of the amplifier means (13).

4. A device according to claim 3, characterized in that it further comprises limiter means (14) inserted after the amplifier means (13) for limiting the maximum amplitude of the accentuation term.

# FIG.1

# FIG. 2